(19) Europäisches Patentamt
European Patent Office
Office européen des brevets

(11) EP 1 026 196 A2

# (12) EUROPEAN PATENT APPLICATION

(43) Date of publication:
**09.08.2000 Bulletin 2000/32**

(51) Int. Cl.[7]: **C08K 5/092**, C08K 3/36, C08L 21/00

(21) Application number: **00300930.5**

(22) Date of filing: **07.02.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **08.02.1999 JP 3043299**
**31.01.2000 JP 2000022605**

(71) Applicant:
**Bridgestone Corporation**
**Tokyo (JP)**

(72) Inventor: **Kusano, Tomohiro**
**Kodaira-shi, Tokyo (JP)**

(74) Representative: **Whalley, Kevin**
**MARKS & CLERK,**
**57-60 Lincoln's Inn Fields**
**London WC2A 3LS (GB)**

## (54) Pneumatic tire

(57) A pneumatic tire which uses for a tire member a rubber composition comprising a rubber component comprising at least one selected from natural rubber and diene base synthetic rubber, silica having a nitrogen adsorption specific surface area ($N_2SA$) of 210 to 260 $m^2/g$ and a dibutyl phthalate oil absorption (DBP) of 200 to 260 ml/100 g and at least one compound selected from aromatic polycarboxylic acid derivatives represented by the following Formula (I), wherein the blending amount of the above aromatic polycarboxylic acid derivatives is 0.5 to 4.0 parts by weight per 100 parts by weight of the rubber component, and carbon black added to the rubber composition has preferably a specific colloidal characteristic:

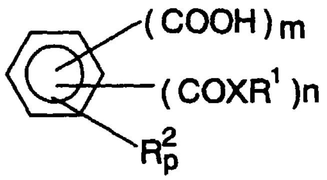

(I)

[(wherein $R^1$ : a $C_1 \sim C_{24}$ alkyl group, a $C_2 \sim C_{24}$ alkenyl group, a $C_3 \sim C_{24}$ aryl group or a halogen-substituted group thereof; $R^2$ : H, OH, a $C_1 \sim C_{24}$ alkyl group, a $C_1 \sim C_{24}$ alkenyl group, a $C_3 \sim C_{24}$ aryl group or a halogen-substituted group thereof; m, n = 1 ~ 3; p = 0 ~ 4; m + n + p = 6 ; X : -O-, $-NR^3-$ ($R^3$ : H, a $C_1 \sim C_{24}$ alkyl group), $-O(R^4O)-_q$ ($R^4$ : a $C_1 \sim C_4$ alkylene group, and q = 1 to 5)].

FIG. 1

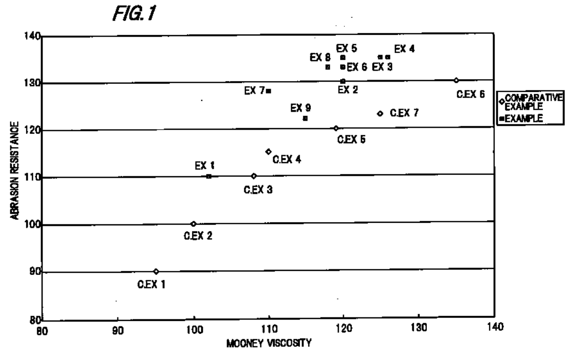


EP 1 026 196 A2

## Description

BACKGROUND OF THE INVENTION

1. Field of the Invention

The present invention relates to a pneumatic tire whose low heat-generating property and abrasion resistance are improved to a large extent without deteriorating workability in producing a tire.

2. Description of the Related Art

A rubber composition blended with silica has heretofore been used for a tire member, particularly for a tread in a pneumatic tire in order to secure a low heat-generating property.
However, silica has a problem in that it is inferior in dispersibility in rubber, and the existing situation is that a satisfactory low heat-generating property is not attained even in those blended with silica.
On the other hand, a rubber composition blended with high structure type carbon black is used for a tire member, particularly for a tread in order to secure abrasion resistance, but a problem with the case where high structure type carbon black is blended into a rubber composition in a large amount is that dispersibility of carbon black is deteriorated, and a reduction in the workability is brought about.
It is disclosed in Japanese Patent Application Laid-Open No. Hei 4-20579 to use an ester of unsaturated fatty acid having 8 to 24 carbon atoms or an ester of unsaturated alcohol having 8 to 24 carbon atoms as a dispersant for carbon black for rubber, and an example in which oleyl phthalate was used is shown therein. Further, an example of stearyl phthalate can be found therein, but this is a comparative example, and its dispersing effect on carbon black is inferior. Further, it is not described at all in this gazette that these esters are effective for improving dispersibility of silica.
A rubber composition blended with silica and carbon black is used for a tire member, particularly for a tread but has the respective problems described above, and therefore the existing situation is that a pneumatic tire which can be improved in both a low heat-generating property and abrasion resistance without deteriorating workability in producing the tire has not yet been obtained.

SUMMARY OF THE INVENTION

In light of the problems on the conventional techniques described above, the present invention is intended solving them, and an object thereof is to provide a pneumatic tire whose low heat-generating property and abrasion resistance are improved to a large extent without deteriorating workability in producing the tire.
The present inventor has continued intensive investigations of the conventional problems described above, that is, investigations regarding improvement in dispersibility of silica contained in a rubber composition in order to improve a heat generating property of a tire, and has resulted in successfully obtaining a rubber composition in which dispersibility of silica is elevated by blending a specific compound and by optimizing the colloidal characteristics and the blending amounts of carbon black and silica and a pneumatic tire in which a low heat-generating property and abrasion resistance have been able to be improved to a large extent without deteriorating workability in producing the tire, and thus coming to complete the present invention.
That is, the present invention comprises the following items (1) to (7):

(1) A pneumatic tire which uses for a tire member a rubber composition comprising a rubber component comprising at least one selected from natural rubber and diene based synthetic rubbers, silica having a nitrogen adsorption specific surface area ($N_2SA$) of 210 to 260 $m^2/g$ and a dibutyl phthalate oil absorption (DBP) of 200 to 260 ml/100 g, and at least one compound selected from aromatic polycarboxylic acid derivatives represented by the following Formula (I), wherein the blending amount of the above aromatic polycarboxylic acid derivatives is 0.5 to 4.0 parts by weight per 100 parts by weight of the rubber component:

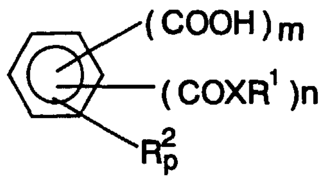

(I)

wherein $R^1$ represents an alkyl group having 1 to 24 carbon atoms, an alkenyl group having 2 to 24 carbon atoms, an aryl group having 3 to 24 carbon atoms or a halogen-substituted group thereof; $R^2$ represents a hydrogen atom, a hydroxyl group, an alkyl group having 1 to 24 carbon atoms, an alkenyl group having 2 to 24 carbon atoms, an aryl group having 3 to 24 carbon atoms or a halogen-substituted group thereof; m and n each represent an integer of 1 to 3; p represents an integer of 0 to 4; $m + n + p = 6$ , and when m is 2 or more, a part or all of the carboxyl groups may form anhydrides; X represents -O-, $-NR^3-$ ($R^3$ represents a hydrogen atom or an alkyl group having 1 to 24 carbon atoms) or $-O(R^4O)q-$ ($R^4$ represents an alkylene group having 1 to 4 carbon atoms, and q represents an integer of 1 to 5).

(2) The pneumatic tire as described in the above item (1), wherein the aromatic polycarboxylic acid derivatives represented by Formula (I) described above comprise a derivative of at least one selected from phthalic acid, trimellitic acid, pyromellitic acid or an anhydride thereof.

(3) The pneumatic tire as described in the above item (1) or (2), wherein the natural rubber is contained in an amount of 50 parts by weight or more in 100 parts by weight of the above rubber component.

(4) The pneumatic tire as described in any one of the above items (1) to (3), wherein the rubber composition further contains carbon black having a nitrogen adsorption specific surface area ($N_2SA$) of 90 to 160 $m^2/g$ and a dibutyl phthalate oil absorption (DBP) of 80 to 150 ml/100 g.

(5) The pneumatic tire as described in the above item (4), wherein the blending amount of silica in the rubber composition is 5 to 25 parts by weight per 100 parts by weight of the rubber component and the blending amount of carbon black is 4.2 times or less as much as that of silica in terms of a weight ratio.

(6) The pneumatic tire as described in any one of the above items (1) to (5), being a pneumatic tire for heavy load.

(7) The pneumatic tire as described in the above item (6), being an off-road tire.

BRIEF DESCRIPTION OF THE DRAWING

Fig. 1 is an evaluation chart (graph), wherein a Mooney viscosity ($ML_{1+4}$), which is an index for evaluating plant workability is plotted on an axis of abscissa against abrasion resistance on an axis of ordinate.

DETAILED DSCRIPTION OF THE PREFERRED EMBODIMENT

The embodiment of the present invention shall be explained below in detail.

The present invention relates to a pneumatic tire in which used for a tire member is a rubber composition comprising a rubber component comprising at least one selected from natural rubber and diene based synthetic rubbers, silica having a nitrogen adsorption specific surface area ($N_2SA$) of 210 to 260 $m^2/g$ and a dibutyl phthalate oil absorption (DBP) of 200 to 260 ml/100 g, and at least one compound selected from the aromatic polycarboxylic acid derivatives represented by the Formula (I) described above, wherein the blending amount of the above aromatic polycarboxylic acid derivatives is 0.5 to 4.0 parts by weight per 100 parts by weight of the rubber component.

The silica used in the present invention has to have a nitrogen adsorption specific surface area ($N_2SA$) of 210 to 260 $m^2/g$ and a dibutyl phthalate oil absorption (DBP) of 200 to 260 ml/100 g in order to allow improvement in abrasion resistance to be compatible with a low heat-generating property.

If the respective values of above $N_2SA$ and DBP are less than the values described above, satisfactory abrasion resistance is not obtained, and if the respective values of $N_2SA$ and DBP exceed the values described above, it is difficult to allow the workability to be compatible with the low heat-generating property. Accordingly, both are not preferred.

Preferable ranges of $N_2SA$ and DBP are 220 to 250 $m^2/g$ and 220 to 260 ml/100 g, respectively. Particularly, the silica having an $N_2SA$ of 220 to 250 $m^2/g$ and a DBP of 220 to 260 ml/100 g is preferred.

The blending amount (A) of the silica is 5 to 25 parts by weight, preferably 7 to 20 parts by weight per 100 parts by weight of the rubber component.

The aromatic polycarboxylic acid derivatives used in the present invention represented by the Formula (I) described above act as a reactive plasticizers, and can prevent a rise in the viscosity (Mooney viscosity: $ML_{1+4}$) caused by blending silica having poor dispersibility in non-vulcanized state so that they can prevent a reduction in the workability and the productivity, while maintaining the abrasion resistance and the breaking resistance.

Most of conventional workability-improving agents and plasticizers (typical one is a process oil) can prevent an increase in $ML_{1+4}$ but notably reduce the abrasion resistance and the low heat-generating property, so that it is difficult to use them for a tread rubber of a pneumatic tire. This is considered to be caused by the fact that such plasticizers remain in the rubber composition in the original form even after vulcanization and stay in a free state without taking part in reinforcement of the rubber. In contrast with this, in the present invention, while the aromatic polycarboxylic acid derivatives represented by the Formula (I) described above have an effect of elevating dispersibility of silica in non-vulcanized state, they can improve the abrasion resistance and the low heat-generating property since they react with a

polymer contained in the rubber composition during vulcanization and do not remain free unlike oil.

Among the aromatic polycarboxylic acid derivatives represented by the Formula (I) described above, a derivative of any one of phthalic acid, trimellitic acid, pyromellitic acid or an anhydride thereof, for example, is preferred.

In the aromatic polycarboxylic acid derivatives represented by the Formula (I) described above, $R^1$ is preferably an alkyl group having 1 to 22 carbon atoms, and X is preferably -O- or $-O(R^4O)_q-$.

Further, among the aromatic polycarboxylic acid derivatives represented by the Formula (I) described above, a derivative of any one of phthalic acid, trimellitic acid, pyromellitic acid or an anhydride thereof is preferred, wherein $R^1$ in the Formula (I) described above is preferably an alkyl group having 1 to 22 carbon atoms and X is preferably -O- or $-O(R^4O)_q-$ at the same time.

To be specific, it includes monodecyl phthalate, monostearyl phthalate, N-octyl phthalic acid monoamide, monodecyl trimellitate, monostearyl trimellitate, monostearyl pyromellitate, distearyl pyromellitate and a monododecyl phthalate • tri(oxyethylene) adduct.

Among them, monoalkyl phthalates are preferred in terms of a plasticization effect, a low cost and no blooming • bleeding on the surface attributable to their high affinity to a rubber component when they are decomposed, which is the intended effect, and a monododecyl phthalate • tri(oxyethylene) adduct is more preferred.

The blending amount of the aromatic polycarboxylic acid derivative represented by the Formula (I) described above is 0.5 to 4.0 parts by weight, preferably 1.0 to 3.0 parts by weight per 100 parts by weight of the rubber component.

If it is used in a blending amount of less than 0.5 part by weight, a satisfactory silica dispersibility-enhancing effect is not revealed to result in reducing the productivity and the workability, and therefore the a blending amount is not preferred. On the other hand, if the blending amount exceeds 4.0 parts by weight, the reaction thereof with the polymer is saturated, so that a part thereof remains free, which results in reducing the abrasion resistance and the low heat-generating property. Accordingly, it also is not preferred.

By using the aromatic polycarboxylic acid derivative in a blending amount ranging from 0.5 to 4.0 parts by weight, the dispersibility of silica can be elevated to a large extent, and the similar workability and productivity as before blending silica can be secured without having so much variation in the viscosity in non-vulcanized state.

In the rubber composition of the present invention, carbon black may be used in order to secure the abrasion resistance, and carbon black has preferably an $N_2SA$ of 90 to 160 $m^2/g$ and a DBP of 80 to 150 ml/100 g in order to allow improvement in the abrasion resistance to be compatible with the low heat generating property.

If the respective values of above $N_2SA$ and DBP are less than the values described above, the workability is improved but a satisfactory improvement in the abrasion resistance may not be obtained. On the other hand, if the respective values of $N_2SA$ and DBP exceed the values described above, it is difficult to allow the workability to be compatible with the low heat-generating property.

Preferable ranges of $N_2SA$ and DBP are 100 to 150 $m^2/g$ and 90 - 130 ml/100 g, respectively. Particularly, the carbon black having an $N_2SA$ of 100 to 150 $m^2/g$ and a DBP of 90 to 130 ml/100 g is most preferred and may be SAF or ISAF.

A preferable blending amount (B) of carbon black is 30 to 60 parts by weight, more preferably 35 to 55 parts by weight per 100 parts by weight of the rubber component so that intended improvement in the abrasion resistance is to be made.

If the blending amount is less than 30 parts by weight, the abrasion resistance tends to decrease, and the intended rubber composition may not be obtained. On the other hand, if it exceeds 60 parts by weight, a reduction in the workability may exceed the effect on the inhibiting of productivity reduction exerted by the aromatic polycarboxylic acid derivative, which shall be described later, and therefore it is not preferred.

Further, in respect to the blending amounts of silica (A) and carbon black (B), carbon black (B)/silica (A) is preferably $(B)/(A) \leqq 4.2$, more preferably $2.5 \leqq (B)/(A) \leqq 4.2$ and most preferably $2.8 \leqq (B)/(A) \leqq 4.2$ in terms of a weight ratio.

If the weight ratio (B)/(A) described above is larger than 4.2 ($(B)/(A) > 4.2$), it may be difficult to improve the low heat generating property and the abrasion resistance at the same time to a high level, and therefore it is not preferred.

When the blending amount of silica is increased in the range of the ratio of $(B)/(A) \leqq 4.2$ described above, a silane coupling agent is preferably used in combination.

Lower heat generation can be achieved by using this silane coupling agent.

The examples of silane coupling agent includes, for example, bis(3-triethoxysilylpropyl)polysulfide, γ-mercaptopropyltrimethoxysilane, γ-mercaptopropyltriethoxysilane, γ-aminopropyltrimethoxysilane, γ-aminopropyltriethoxysilane, vinyltrimethoxysilane, vinyltriethoxysilane, γ-glycidoxypropyltrimethoxysilane, γ-glycidoxypropylmethyldiethoxysilane, 3-trimethoxysilylpropyl-N,N-dimethylcarbamoyl tetrasulfide, 3-trimethoxysilylpropylbenzothiazolyl tetrasulfide and 3-trimethoxysilylpropylmethacrylate monosulfide.

The blending amount of the silane coupling agent described above is preferably 5 to 15 % by weight based on the amount of silica.

The rubber component used in the present invention comprises at least one selected from natural rubber (NR) and diene based synthetic rubber. The diene based synthetic rubber shall not specifically be restricted, and there can be used, for example, polybutadiene rubber (BR), styrene-butadiene rubber (SBR), isoprene rubber (IR), butyl rubber (IIR) and the like.

The amount of NR is preferably 50 parts by weight or more, more preferably 80 parts by weight or more in 100 parts by weight of the rubber component.

The abrasion resistance and the low heat-generating property can further be improved by setting the amount of NR at 50 parts by weight or more.

In the present invention, there can be blended as well in addition to them, additives such as a vulcanizing agent, a vulcanization accelerator, an antioxidant, zinc oxide (ZnO), stearic acid and waxes which are usually used in the rubber industry.

In the present invention, the rubber composition can be prepared by kneading the rubber component, silica, the aromatic polycarboxylic acid derivative represented by the above mentioned Formula (I), carbon black and the like described above by means of a mixer such as a roll and an internal mixer, and a pneumatic tire can be manufactured by using the above rubber composition for a tire member.

In general, a pneumatic tire has such structure as is provided with a tread part, a pair of sidewall parts linked with both sides of the tread part and a pair of bead parts which are formed respectively in the inner circumferences of the above sidewall parts and as is reinforced by a carcass ply comprising carcass ply cords disposed in a tire radius direction and a belt layer surrounding the crown portion of the above carcass ply and set in the inside of the tread part.

In the pneumatic tire of the present invention, the rubber composition comprising the blend components described above is suitably used for a member of the tire having the structure described above, that is, for example, tread rubber, belt coating rubber, carcass ply rubber, bead filler rubber, rubber chafer or sidewall rubber.

In the production of the pneumatic tire of the present invention, the rubber composition obtained above is applied to the respective tire members. These members are built into a green tire on a drum, and then it is vulcanized and molded by means of a curing machine to obtain an intended pneumatic tire.

In the present invention, a pneumatic tire whose low heat generation property and abrasion resistance are improved to a large extent without having reduction in workability and productivity can be obtained by using the rubber composition described above for a tire member, particularly for a tread part. That is, in the present invention, the pneumatic tire uses the rubber composition in which silica is dispersed well for the rubber members, so that it is improved in the low heat-generating property due to the net work structure which is formed by blended silica and rubber and that it is improved in the abrasion resistance to a large extent due to breaking energy produced by this net work when the rubber is largely deformed.

In particular, the pneumatic tire of the present invention is suited to a pneumatic tire for heavy load for which the low heat generating property and abrasion resistance are strictly required. Further, it can suitably be used for an off-road tire in which heat generation and abrasion (cut abrasion) caused by large deformation of rubber are severe.

EXAMPLES

Next, the present invention shall be explained in further details with reference to examples and comparative examples, but the present invention shall not be restricted to the following examples.

Examples 1 to 9 and Comparative Examples 1 to 7

Rubber compositions were prepared in the following recipes shown in Table 1.

Silica was dried at 300°C for one hour, and then an $N_2SA$ was determined according to ASTM D 4820, and a DBP was determined according to ASTM D 2414. The $N_2SA$ and the DBP of carbon black were measured in accordance with ASTM D 4820 and ASTM D 2414, respectively.

The above respective rubber compositions thus obtained were used for tread rubber to make test tires (size : 3700R57), which was vulcanized under an ordinary vulcanization conditions.

The test tires thus obtained were evaluated for plant workability, a heat generating performance and abrasion resistance by the following evaluation methods.

These evaluation results are shown in the following Table 1. Further, shown in Fig. 1 is an evaluation chart in which the Mooney viscosity ($ML_{1+4}$), which is an index for evaluating the plant workability is plotted on an axis of abscissa against abrasion resistance on an axis of ordinate.

Evaluation method of plant workability:

The Mooney viscosity ($ML_{1+4}$) was measured at 130 ± 1°C by means of an L type rotor and shown by index,

wherein the index of Comparative Example 2 was set at 100 (control).

It is shown that the smaller the value, the better the workability. This value reflects on the warming property in a warming mill in the plant, and it is shown that the smaller the value, the shorter the warming time and the better the workability.

Evaluation method of heat generating performance:

A drum test was carried out at a fixed speed (10 km/h), at an internal pressure of 7.0 kg/cm$^2$ and under a load of 50 t to measure a temperature (temperature after running for 24 hours) at a fixed position in the inside of the tread, and an reciprocal number thereof was calculated to show the performance by index, wherein the index of Comparative Example 2 was set at 100. It is shown that the smaller the value, the better the heat generating performance.

Evaluation method of abrasion resistance:

The depth of the groove remaining after running for 2000 hours was measured at several portions to evaluate the abrasion resistance from an average value thereof according to the following equation. It is shown that the larger the value, the better the abrasion resistance. The value was shown by index, wherein the index of Comparative Example 2 was set at 100.

$$\{(\text{Reduction of groove depth of control tire})/\ (\text{Reduction of groove depth of test tire})\} \times 100$$

Table 1

(Parts by weight)

| | Comparative Example | | | | | | |
|---|---|---|---|---|---|---|---|
| | 1 | 2 | 3 | 4 | 5 | 6 | 7 |
| Rubber (NR) | 100 | 100 | 100 | 100 | 100 | 100 | 100 |
| $SiO_2$ : amount | 10 | - | 7 | 10 | 15 | 12 | 14 |
| $N_2SA$ | 200 | - | 200 | 200 | 235 | 235 | 235 |
| DBP | 140 | - | 140 | 140 | 250 | 250 | 250 |
| Carbon Black:amount | 40 | 45 | 38 | 45 | 45 | 50 | 40 |
| $N_2SA$ | 70 | 145 | 155 | 145 | 140 | 140 | 140 |
| DBP | 100 | 90 | 110 | 90 | 120 | 95 | 95 |
| $CB/SiO_2$ (B)/(A) | 4.0 | - | 5.6 | 4.5 | 3.0 | 4.2 | 2.9 |
| Monostearyl phthalate | - | - | - | - | 5 | | |
| Monostearyl trimellitate | | | | | | | |
| Monododecyl(trioxyethylene) phthalate | | | | | | | |
| Monooctyl(trioxyethylene) phthalate | | | | | | | |
| Antioxidant | 1 | 1 | 1 | 1 | 1 | 1 | 1 |
| Stearic acid | 2 | 2 | 2 | 2 | 2 | 2 | 2 |
| Wax | 2 | 2 | 2 | 2 | 2 | 2 | 2 |
| ZnO | 3 | 3 | 3 | 3 | 3 | 3 | 3 |
| CZ | 1.5 | 1 | 1.6 | 1.6 | 1.8 | 1.8 | 1.8 |
| Sulfur | 1.7 | 1.5 | 1.8 | 1.8 | 2 | 2 | 2 |
| Bis(3-triethoxysilyl-propyl)polysulfide | | | | | | | 1.5 |
| Mooney viscosity | 95 | 100 | 108 | 110 | 119 | 135 | 125 |
| Heat generating property | 89 | 100 | 103 | 109 | 116 | 109 | 100 |
| Abrasion resistance | 90 | 100 | 110 | 115 | 120 | 130 | 123 |

Table 1 (continued)

| | Example | | | | | | | | |
|---|---|---|---|---|---|---|---|---|---|
| | 1 | 2 | 3 | 4 | 5 | 6 | 7 | 8 | 9 |
| Rubber (NR) | 100 | 100 | 100 | 100 | 100 | 100 | 100 | 100 | 100 |
| $SiO_2$: amount | 10 | 12 | 15 | 15 | 15 | 12 | 12 | 12 | 14 |
| $N_2SA$ | 235 | 235 | 235 | 235 | 235 | 235 | 235 | 235 | 235 |
| DBP | 250 | 250 | 250 | 250 | 250 | 250 | 250 | 250 | 250 |
| Carbon Black: amount | 40 | 50 | 45 | 45 | 45 | 50 | 50 | 50 | 40 |
| $N_2SA$ | 110 | 140 | 140 | 140 | 140 | 140 | 140 | 140 | 140 |
| DBP | 100 | 95 | 120 | 120 | 120 | 95 | 95 | 95 | 95 |
| $CB/SiO_2$ (B)/(A) | 4.0 | 4.2 | 3.0 | 3.0 | 3.0 | 4.2 | 4.2 | 4.2 | 2.9 |
| Monostearyl phthalate | 1 | 1 | 2 | | | | | | |
| Monostearyl trimellitate | | | | 2 | | | | | |
| Monododecyl(trioxyethylene) phthalate | | | | | 1 | 1 | 2 | | 1 |
| Monooctyl(trioxyethylene) phthalate | | | | | | | | 1 | |
| Antioxidant 6C | 1 | 1 | 1 | 1 | 1 | 1 | 1 | 1 | 1 |
| Stearic acid | 2 | 2 | 2 | 2 | 1 | 2 | 2 | 2 | 2 |
| Wax | 2 | 2 | 2 | 2 | 1 | 2 | 2 | 2 | 2 |
| ZnO | 3 | 3 | 3 | 3 | 1 | 3 | 3 | 3 | 3 |
| Vulcanization acceleration CZ | 1.5 | 1.8 | 1.8 | 1.8 | 1.8 | 1.8 | 1.8 | 1.8 | 1.8 |
| Sulfur | 1.7 | 2 | 2 | 2 | 2 | 2 | 2 | 2 | 2 |
| Bis(3-triethoxysilyl-propyl)polysulfide | | | | | | | | | 1.5 |
| Mooney viscosity | 102 | 120 | 125 | 126 | 120 | 120 | 110 | 118 | 115 |
| Heat generating property | 93 | 109 | 109 | 109 | 109 | 108 | 113 | 107 | 102 |
| Abrasion resistance | 110 | 130 | 135 | 135 | 135 | 133 | 128 | 133 | 122 |

CZ:N-Cyclohexyl-2-benzothiazyl sulfenamide
6C:N-(1.3-Dimethyl butyl)-N'-phenyl-p-phenylenediamine

Comments on Table 1

As apparent from the results shown in Table 1 and Fig. 1, it has been found that in Examples 1 to 9 falling in the scope of the present invention, the plant workability, the low heat-generating property and the abrasion resistance are excellent as compared with those in Comparative Examples 1 to 7 falling outside the scope of the present invention.
To specifically observe Examples 1 to 9, in Examples 1 to 9, the colloidal characteristic and the blending amount of silica are allowed to fall in the ranges of the present invention, and the rubber composition which is blended with a specific amount of one aromatic polycarboxylic acid derivative, which can elevate the dispersibility of silica, is used for a pneumatic tire. Further, the colloidal characteristic of carbon black falls in the preferred range. It has been found that the pneumatic tire whose low heat-generating property and abrasion resistance are improved to a large extent without deteriorating (plant) workability in producing the tire can be obtained.
In contrast with this, to specifically observe Comparative Examples 1 to 7, Comparative Examples 1 to 4 are cases where the aromatic polycarboxylic acid derivatives, which can elevate the dispersibility of silica are not blended; Comparative Example 1 is a case where the characteristic values of $N_2SA$ and DBP of silica fall outside the ranges of the present invention and carbon black has an $N_2SA$ of 70 (<90); Comparative Example 2 is a case where silica is not blended (control); Comparative Examples 3 and 4 are cases where the characteristic values of $N_2SA$ and DBP of silica fall outside the ranges of the present invention and Comparative Example 3 and 4 are cases where carbon black (B)/ silica (A) is 5.6 (>4.2) and 4.5(>4.2) in terms of a weight ratio, respectively.
Further, Comparative Example 5 is a case where the characteristic values of $N_2SA$ and DBP of silica fall in the ranges of the present invention but the aromatic polycarboxylic acid derivative is added in an amount of 5 parts by weight (>4 parts by weight), and Comparative Examples 6 and 7 are cases where the characteristic values of $N_2SA$ and DBP of silica fall in the ranges of the present invention and the $N_2SA$ and DBP of carbon black are 140 and 95 respectively but where the aromatic polycarboxylic acid derivative is not blended.
It has been found that in these Comparative Examples 1 to 7 falling outside the scope of the present invention, none of the plant workability, the low heat-generating property and the abrasion resistance can be satisfied as shown in Fig. 1.

**Claims**

1. A pneumatic tire which uses for a tire member a rubber composition comprising a rubber component comprising at least one selected from natural rubber and diene based synthetic rubbers, silica having a nitrogen adsorption specific surface area ($N_2SA$) of 210 to 260 $m^2/g$ and a dibutyl phthalate oil absorption (DBP) of 200 to 260 ml/100 g, and at least one compound selected from aromatic polycarboxylic acid derivatives represented by the following Formula (I), wherein the blending amount of said aromatic polycarboxylic acid derivatives is 0.5 to 4.0 parts by weight per 100 parts by weight of the rubber component:

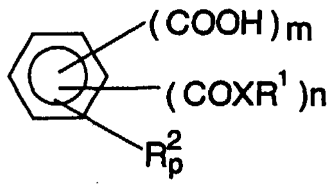

(I)

wherein $R^1$ represents an alkyl group having 1 to 24 carbon atoms, an alkenyl group having 2 to 24 carbon atoms, an aryl group having 3 to 24 carbon atoms or a halogen-substituted group thereof; $R^2$ represents a hydrogen atom, a hydroxyl group, an alkyl group having 1 to 24 carbon atoms, an alkenyl group having 2 to 24 carbon atoms, an aryl group having 3 to 24 carbon atoms or a halogen-substituted group thereof; m and n each represent an integer of 1 to 3; p represents an integer of 0 to 4; $m + n + p = 6$ , and when m is 2 or more, a part or all of the carboxyl groups may form anhydrides; X represents -O-, $-NR^3-$ ($R^3$ represents a hydrogen atom or an alkyl group having 1 to 24 carbon atoms) or $-O(R^4O)_q-$($R^4$ represents an alkylene group having 1 to 4 carbon atoms, and q represents an integer of 1 to 5).

2. The pneumatic tire as described in claim 1, wherein the aromatic polycarboxylic acid derivatives represented by Formula (I) comprise a derivative of at least one selected from phthalic acid, trimellitic acid, pyromellitic acid or an anhydride thereof.

3. The pneumatic tire as described in claim 1 or 2, wherein the natural rubber is contained in an amount of 50 parts

by weight or more in 100 parts by weight of the above rubber component.

**4.** The pneumatic tire as described in any one of claims 1 to 3, wherein the rubber composition further contains carbon black having a nitrogen adsorption specific surface area ($N_2SA$) of 90 to 160 $m^2/g$ and a dibutyl phthalate oil absorption (DBP) of 80 to 150 ml/100 g.

**5.** The pneumatic tire as described in claim 4, wherein the blending amount of silica in the rubber composition is 5 to 25 parts by weight per 100 parts by weight of the rubber component and the blending amount of carbon black is 4.2 times or less as much as that of silica in terms of a weight ratio.

**6.** The pneumatic tire as described in any one of claims 1 to 5, being a pneumatic tire for heavy load.

**7.** The pneumatic tire as described in claim 6, being an off road tire.

FIG. 1

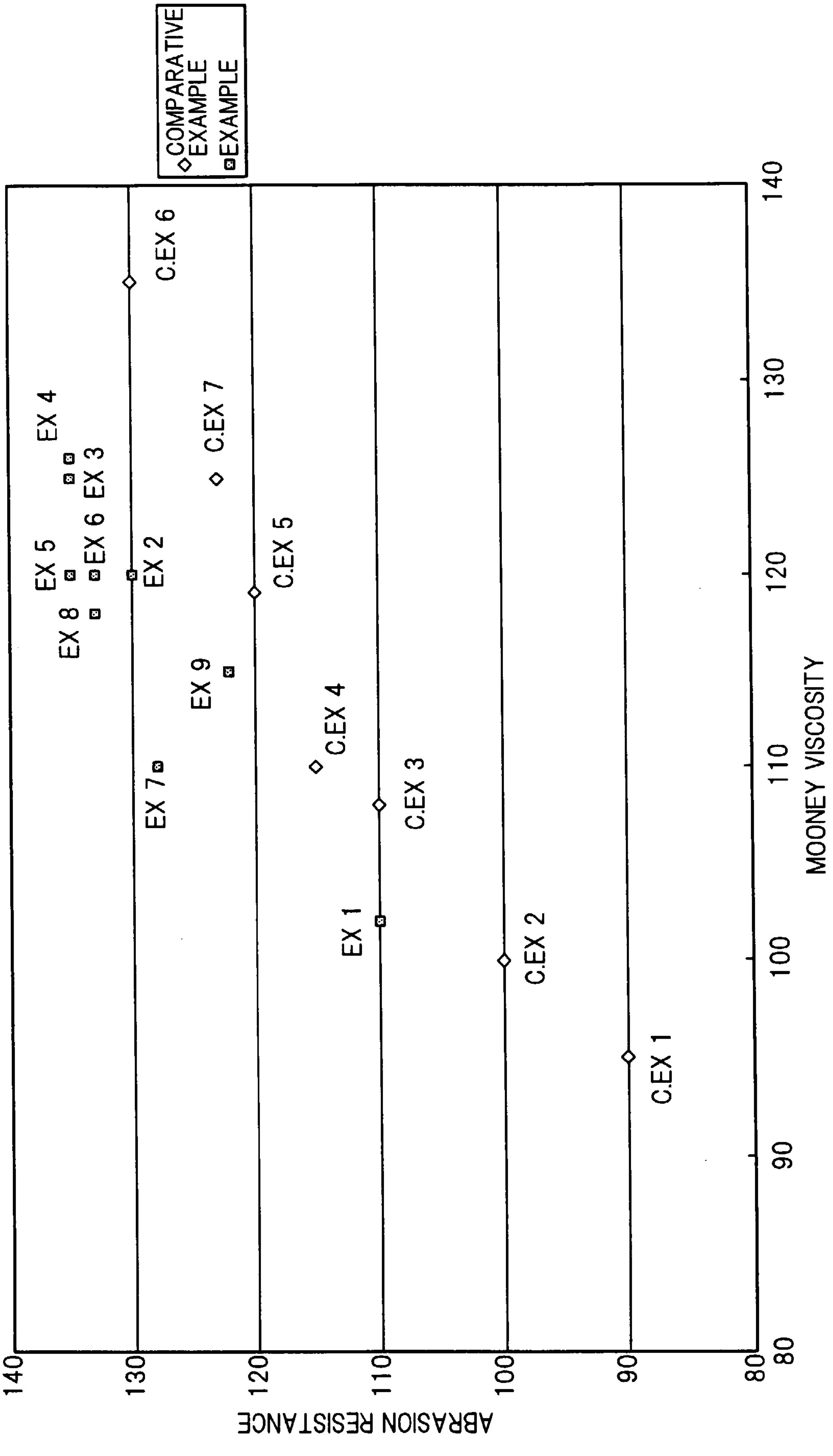
COMPARATIVE EXAMPLE
EXAMPLE
ABRASION RESISTANCE
MOONEY VISCOSITY
140
130
120
110
100
90
80
EX 1
EX 2
EX 3
EX 4
EX 5
EX 6
EX 7
EX 8
EX 9
C.EX 1
C.EX 2
C.EX 3
C.EX 4
C.EX 5
C.EX 6
C.EX 7